# EUROPÄISCHE PATENTSCHRIFT

(11) **EP 3 206 865 B1**
(45) Veröffentlichungstag und Bekanntmachung des Hinweises auf die Patenterteilung: **28.07.2021**
(21) Anmeldenummer: 15834710.4
(22) Anmeldetag: 19.10.2015
(51) Int. Cl.: B31B 160/10, B31B 70/84, B31B 70/04, B29C 65/78, B29C 65/00

(54) **VERFAHREN UND ANLAGE ZUM HERSTELLEN VON MEDIZINISCHEN BEUTELN**
METHOD AND PLANT FOR PRODUCING MEDICAL POUCHES
PROCEDE ET INSTALLATION POUR LA FABRICATION DE SACS MEDICAUX

(30) Priorität: 19.10.2014 DE 102014015348
(43) Veröffentlichungstag der Anmeldung: 23.08.2017
(73) Patentinhaber: Kiefel GmbH, 83395 Freilassing (DE)
(72) Erfinder: STEIN, Bernd, 83417 Kirchanschöring (DE)
(74) Vertreter: FARAGO Patentanwälte
(86) Internationale Anmeldenummer: PCT/DE2015/000514
(87) Internationale Veröffentlichungsnummer: WO 2016/070863

(56) Entgegenhaltungen:
- WO-A1-2005/095089
- WO-A2-2012/006980
- WO-A2-2014/154196
- DE-A1-102006 004 611
- US-B1- 6 876 896

## Beschreibung

Die Erfindung betrifft ein Verfahren zum Herstellen von medizinischen Beuteln an einer Anlage und eine Anlage zum Herstellen von medizinischen Beuteln.

Ein Verfahren und eine Anlage zum Herstellen von medizinischen Beuteln wird von der EP 1 780 000 A1 offenbart.

Die nachveröffentlichte DE 10 2014 013 729.5 offenbart das Einbringen einer Folienbahn in eine Anlage zum Herstellen von Beuteln.

Die nachveröffentlichte WO 2014/154196 A2 offenbart das Verwenden von individuell in die Transportbahn ein- und ausbringbaren Trägern, insbesondere ein Transportsystem für eine kunststoffverarbeitende Fügeanlage, die Fügeanlage selbst sowie ein Verfahren zum Betreiben einer kunststoffverarbeitenden Fügeanlage. Es ist bekannt, Kunststoffkomponenten mittels Transportsystemen zum Verarbeiten zu einem Hauptmaterialtransport zuzubringen, beispielsweise zu einem laufenden Folienband, um Beutel für medizinische Zwecke herzustellen. Es wird vorgeschlagen, individuell geregelt bewegliche Werkstückträger für die Komponenten vorzusehen oder zusätzlich zu einer Arbeitstransportbahn der Werkstückträger für eine separate Schar Werkstückträger eine Bahn zum Zwischenparken vorzusehen.

DE 10 2006 004 611 A1 offenbart eine Vorrichtung zur Herstellung von Kunststoffbeuteln aus Kunststofffolie mit Ports. Die Vorrichtung hat einen oder mehrere Folienspender zur Bereitstellung von Kunststofffolien, einen oder mehrere Portspender zur Bereitstellung von einem oder mehreren Kunststoffelementen, ein kombiniertes Schweiß/Schneidwerkzeug und mindestens ein weiteres Schweißwerkzeug zum Schweißen der Ports. Das Schweiß/Schneidwerkzeug bringt die Kunststoffelemente zur Bildung von Ports (210) an die Kunststoffbeutel, nimmt Zusatzfolie auf und schweißt die Kunststofffolien an eine Schweißform.

WO 2012/006980 offenbart Anlagen zum Verschweißen von Folien mit einem Einsetzstück zu einem Beutel sowie zum Durchführen eines weiteren Bearbeitungsschritts, beispielsweise zum Befüllen des Beutels, die üblicherweise eine Übergabe von einem Transportmittel zum anderen haben. Hier wird vorgeschlagen, ein durchgehendes Mittel für die Verschweißstation und einen weiteren Bearbeitungsschritt zu verwenden. Hierzu werden auch praktische Umsetzungsmöglichkeiten offenbart.

Der Erfindung liegt die Aufgabe zugrunde, eine Alternative oder Verbesserung zu schaffen.

Diese Aufgabe löst nach einem ersten Aspekt der Erfindung ein Verfahren zum Herstellen von medizinischen Beuteln an einer Anlage, aus zwei Lagen Kunststofffolie und pro Beutel mindestens einer Komponente, mit einer Schar Positionierhilfen für die Komponenten, und mit einer Schar Träger für die Positionierhilfen, wobei die Positionierhilfen an den Trägern getragen werden, wobei die Träger mittels einer Führung in einer Endlosbahn transportiert werden, wobei die Anlage eine Komponentenapplizierstation aufweist, die dazu eingerichtet ist, eine von einer Positionierhilfe mittels eines Trägers in die Station eingebrachte Komponente in eine Fügeverbindung mit der Kunststofffolie zu bringen, wobei die Träger entlang einer Endlosbahn geführt werden, wobei sich das Verfahren dadurch kennzeichnet, dass die Träger auf ihrer Endlosbahn abwechselnd zunächst entlang einer Prozessstrecke und anschließend entlang einer Rücklaufstrecke zwischen einer ersten und einer zweiten Umkehrung geführt werden, wobei die Träger in der Prozessstrecke entweder Stoß an Stoß aneinandergereiht sind oder Abstände zueinander haben, wobei die Träger in der Rücklaufstrecke so stark in Rückführ-Richtung beschleunigt werden, dass sie sich schneller vom Einlauf in die Rücklaufstrecke entfernen als weitere Träger nach Durchlauf durch die Prozessstrecke in den Einlauf in die Rücklaufstrecke nachgeführt werden, um die Abstände zwischen den Trägern zu erhöhen, und wobei die Träger zum intermittierenden Durchlaufenden der Prozessstrecke wieder auf kleinere Abstände gebremst werden.

Begrifflich sei hierzu Folgendes erläutert:
Als ein "medizinischer Beutel" ist ein Beutel zur Verwendung im medizinisch-technischen Feld zu verstehen, also beispielsweise ein Infusionsbeutel, ein Blutbeutel, ein Sammelbeutel etc.

Die beiden "Lagen Kunststofffolie" bilden bei der typischen Beutelform, nämlich mit ausgeprägter zweidimensionaler körperlicher Gestalt, jedenfalls in leerem Zustand, die Oberseite und die Unterseite des Beutels. Die beiden Folien werden üblicherweise miteinander verschweißt, um einen flüssigkeitsdichten Beutelumfang sicherzustellen.

Es sei ausdrücklich darauf hingewiesen, dass im Rahmen der hier vorliegenden Patentanmeldung unbestimmte Artikel und Zahlenangaben wie "ein", "zwei" usw. im Regelfall als Mindestens-Angabe zu verstehen sein sollen, also als "mindestens ein...", "mindestens zwei..." usw., sofern sich nicht aus dem jeweiligen Kontext implizit oder explizit ergibt, dass etwa dort nur "genau ein...", "genau zwei..." usw. gemeint sein kann oder soll.

So ist es beispielsweise ohne weiteres denkbar, dass ein medizinischer Beutel aus mehr als zwei Lagen Kunststofffolie hergestellt ist.

Die einzubringenden "Komponenten", pro Beutel also in der Regel mindestens eine Komponente, können angesichts der verschiedenen möglichen Beutelfunktionen verschiedenartig sein. Im Fall eines medizinischen Beutels, der mit einer Injektionsflüssigkeit befüllt wird, ist üblicherweise mindestens ein Port vorgesehen. Beispiele für Ports lassen sich der WO 2014/154195 A1 entnehmen.

Die "Positionierhilfen" können in einem einfachen Fall Halter sein, welche beispielsweise in die Komponenten hineingreifen oder an die Komponenten herangreifen, jedenfalls aber im Idealfall in unmittelbarer Verbindung zur jeweiligen Komponente stehen.

Die Positionierhilfen werden an den "Trägern" getragen, d.h. es handelt sich um Baugruppen aus jeweils mindestens zwei Elementen.

Die Träger wiederum werden mittels einer "Führung" in einer "Endlosbahn" transportiert. Sowohl Führung als auch Endlosbahn können physikalische Entitäten sein, aber auch logische Entitäten. Eine Führung kann beispielsweise eine Schiene sein, ein Seilzug oder ähnliches. Die Endlosbahn hingegen kann eine durchgehende Bahn sein, oder sie kann sich aus verschiedenen Teilstücken zusammensetzen, und die Endlosbahn kann beispielsweise mechanisch oder elektronisch gesteuert werden.

Die "Komponentenapplizierstation" kann beispielsweise eine Vorschweißstation, eine Schweißstation oder eine Nachschweißstation sein, wobei selbstverständlich auch eine kombinierte Station in Betracht kommt, beispielsweise eine kombinierte Schweiß-TrennStation.

Die "Prozessstrecke" weist eine Mehrzahl Stationen auf.

Die Rücklaufstrecke kann zwar ebenfalls ein oder mehrere Stationen aufweisen, wird aber jedenfalls eine geringere Dichte an Stationen haben, also weniger Stationen pro Laufstrecke. Mit einfachen Worten findet auf der Prozessstrecke eine Mehrzahl von Prozessschritten statt. An der Rücklaufstrecke findet entweder kein Prozessschritt statt, oder es finden nur vor- und nachbereitende Schritte wie beispielsweise Reinigungsschritte statt, jedenfalls aber keine Fügeverbindung, oder es findet zumindest nur eine Minderzahl Prozessschritte an der Rücklaufstrecke statt, im Vergleich zur Prozessstrecke.

Die Prozessstrecke und die Rücklaufstrecke können sich im einfachsten Fall geometrisch definieren, nämlich jeweils als zumindest im Wesentlichen gerade Strecke, wobei zwischen der Prozessstrecke und der Rücklaufstrecke jeweils eine Umkehrung erfolgt. Die beiden Strecken können jedoch jeweils auch komplexer sein.

Die Prozessstrecke wird intermittierend durchlaufen. Eine Mehrzahl Träger mit einer entsprechenden Mehrzahl Positionierhilfen bewegt sich entlang der Prozessstrecke intermittierend. Bevorzugt im selben Takt bewegen sich die Träger entlang der Prozessstrecke.

Die Prozessstrecke kann sich beispielsweise auch dadurch definieren, dass die Träger entlang der Prozessstrecke einen identischen Vorschubtakt aufweisen.

Jedenfalls haben die Träger in der Prozessstrecke eine höhere Dichte, also eine höhere Anzahl von Trägern pro Prozessstrecke. Somit haben die Träger in der Prozessstrecke im Mittel einen geringen Abstand. Beispielhafte Werte können eine Prozessstrecke von 3 m bis 10 m aufweisen, wobei sich entlang dieser Länge der Prozessstrecke etwa zehn bis dreißig oder auch mehr Träger befinden können, während die Anlage im Betrieb ist.

Eine solche Anlage führt demnach zu einer hohen erforderlichen Anzahl an produktspezifischen Positionierhilfen.

Um die Anzahl an produktspezifischen Positionierhilfen zu verringern, werden die Träger nach dem Durchlaufen der Prozessstrecke auf größere Abstände beschleunigt, so dass sie die Rücklaufstrecke mit einem großen Abstand zueinander durchlaufen. Mit anderen Worten befinden sich dadurch nur wenige produktspezifische Positionierhilfen mit ihren Trägern in der Rücklaufstrecke.

Der Dichteunterschied und somit der Anzahl-Unterschied zwischen Trägern in der Prozessstrecke und Trägern in der Rücklaufstrecke richtet sich nach dem Grad der Beschleunigung der Träger für die Rücklaufstrecke. Bei einer sehr hohen Beschleunigung, somit also einer hohen Geschwindigkeit der Träger beim Durchlaufen der Rücklaufstrecke, ist es sogar möglich, dass sich sehr wenige bis hin zu teilweise sogar keinem einzigen Träger in der Rücklaufstrecke befinden, wobei "keine Träger" in der Rücklaufstrecke selbstverständlich immer nur intermittierend kurz festgestellt werden kann, weil schließlich intermittierend die Träger auch durch die Rücklaufstrecke laufen müssen.

Um die Rückführung entlang der Rücklaufstrecke zu beschleunigen, wird vorgeschlagen, dass die Träger entlang der Rücklaufstrecke in einer durchgehenden Bewegung geführt werden.

Es sein in diesem Zusammenhang darauf hingewiesen, dass die Rücklaufstrecke und die Prozessstrecke nicht zwingend gleich lang gestaltet sein müssen. Vielmehr ist es auch denkbar, dass beispielsweise an einer Vorderseite der Anlage die Prozessstecke angeordnet ist, während auf der Rückseite der Anlage die Rücklaufstrecke angeordnet ist. Es kann jedoch trotzdem an der Rückseite der Anlage die eine oder andere Station vorgesehen sein, beispielsweise zum Reinigen der Positionierhilfen oder zum Aufstecken von schlauchförmigen Teilen oder Ports. In einem solchen Fall kommen gleich zwei verschiedene Strecken jeweils als Rücklaufstrecke im Sinne der hier vorliegenden Patentanmeldung in Betracht: einerseits die gesamte Rücklaufstrecke einschließlich der vereinzelten dort angeordneten Stationen, andererseits - und vor allem - eine stationsfreie Strecke, welche somit lediglich dem Rücklauf dient. Die Proportion einer solchen reinen Rücklaufstrecke ohne Stationen kann ohne weiteres mehr als ein Drittel, mehr als die Hälfte, mehr als zwei Dritte, mehr als drei Viertel oder einen größeren Anteil der Prozessstrecke ausmachen.

Eine besonders vorteilhafte geometrische Konstellation kann sich für die Anlage dann ergeben, wenn die Rücklaufstrecke und die Prozessstrecke parallel zueinander liegen.

Da ohnehin an der Prozessstrecke ein intermittierender Folienvorschub vorgesehen ist, wird vorgeschlagen, dass die Träger entlang der Prozessstrecke mit dem intermittierenden Folienvorschub gekoppelt werden und für den Rücklauf entlang der Rücklaufstrecke vom intermittierenden Folienvorschub entkoppelt werden.

Auf diese Weise können die Träger entlang der Prozessstrecke sehr präzise bewegt werden, so dass der notwendige Antrieb für die Halter einfach vom ohnehin notwendigen Antrieb für den Folienvorschub mit übernommen werden kann.

Dennoch sind die Träger nicht vollständig vom Folienvorschub abhängig, weil sie für den Rücklauf vom Folienvorschub entkoppelt werden.

Die Kopplung der Träger mit dem intermittierenden Folienvorschub entlang der Prozessstrecke kann mittels eines mechanischen Koppelglieds erfolgen.

Ein mechanisches Koppelglied kann beispielsweise hin- und zurückbewegbar angetrieben sein, oder es kann passiv einkoppeln und auskoppeln. In einem besonders einfachen Fall kann das mechanische Koppelglied von einem Mitnehmer am Antrieb des intermittierenden Folienvorschubs mitgenommen werden.

Insbesondere lässt sich vorstellen, dass die Mitnehmer an einem festen Umlaufband fixiert sind, wobei das feste Umlaufband beispielsweise mit einem Riementrieb oder einem Kettentrieb angetrieben sein kann.

Alternativ oder sogar kumulativ lässt sich denken, dass die Träger auf der Prozessstrecke für den intermittierenden Antrieb und Vorschub mittels eines eigenen Antriebsmittels angetrieben werden, vor allem eines Motors oder eines Permanentmagneten.

Ein Permanentmagnet eignet sich vor allem dann, wenn die Träger mittels Magnetkraft bewegt und angehalten werden sollen.

Vor allem im Falle eines magnetischen Antriebs der Träger wird vorgeschlagen, dass über eine Regelung ein Controller an der Anlage die aktuellen Positionen der antreibenden Magnetfeldgeber und/oder die Positionen der Halter überprüft und mit Sollwerten abgleicht.

Generell sei daraufhingewiesen, dass im Rahmen der hier vorliegenden Patentanmeldung wann immer von einer "Steuerung" die Rede ist auch eine "Regelung" als technisch noch präzisere Ausführungsform mit offenbart verstanden sein soll, anders herum soll wann immer von einer "Regelung" die Rede ist auch eine "Steuerung" vom Offenbarungsgehalt mit erfasst sein. Dies gilt, soweit nicht etwa an der jeweiligen Offenbarungsstelle ausdrücklich mitgeteilt wird, dass dort etwa nur eine Steuerung oder Regelung offenbart sein soll.

Für die Prozessstrecke wird vorgeschlagen, dass die Träger mittels einer elektronischen Kopplung gekoppelt werden.

Eine elektronische Kopplung zeichnet sich dadurch aus, dass eine Regelung einen Sollpositionsgeber, mechanisch-körperlich oder virtuell, und andererseits den gekoppelten Träger als Istwert erfasst werden und miteinander abgeglichen werden.

Es kann auch ein erster Träger in seiner Position geregelt werden, und weitere Träger können in Relation zum ersten Träger geregelt werden. Diese Art der elektronischen Kopplung wird auch als Master-Slave-Kopplung bezeichnet.

Die Träger sind bevorzugt an einen virtuellen Master mittels einer solchen Regelung gekoppelt.

Bei einer solchen Ausführungsform wird ein virtueller Master in seiner Position und in seiner Geschwindigkeit geregelt, und eine Vielzahl an Slave-Trägern wird in Relation zum virtuellen Master gekoppelt.

Der Vorteil einer solchen Ausführungsform ist darin zu sehen, dass ein virtueller Master mangels Masse keine Massenträgheit hat. Der virtuelle Master lässt sich deshalb mit beliebig hohen Geschwindigkeiten und Beschleunigungen in seiner Position und seiner Geschwindigkeit regeln. Die als Slaves angetriebenen weiteren, körperhaften Träger profitieren dann von der hochpräzischen Regelung des virtuellen Masters.

Zum Durchlaufen der Rücklaufstrecke können die Träger mit einer Schnelltransportmechanik gekoppelt werden, beispielsweise aufweisend einen Linearmotor, einen Riemen wie beispielsweise einen Reibriemen oder einen Pusher. Diese können insbesondere über Reibschluss oder Formschluss die Träger entlang der Rücklaufstrecke mit einer deutlich höheren Geschwindigkeit transportieren als sich die Träger entlang der Prozessstrecke bewegen, insbesondere als sich die Träger entlang der Prozessstrecke einschließlich der verschiedenen Prozesszeiten in den Stationen bewegen, im Idealfall aber sogar schneller als sich die Träger in der Prozessstrecke zwischen den einzelnen Stationen bewegen.

An einer Rückseite der Anlage, wobei auf der Rückseite bevorzugt die Rücklaufstrecke angeordnet ist, können die Positionierhilfen besonders geeignet gereinigt werden.

Hinsichtlich der Positionierhilfen wird vorgeschlagen, dass diese die Komponenten zwischen die zwei Lagen Kunststofffolie positionieren und der Fügeprozess in der Komponentenapplizierstation die Komponenten mit den zwei Lagen Kunststofffolie fest verbindet.

Als Fügeprozess kommen insbesondere thermische Schweißprozesse oder Ultraschallschweißprozesse in Betracht. Es wird daher vorgeschlagen, dass die Komponenten vor der Komponentenapplizierstation mittels einer aktiven Heizung vorgewärmt werden.

Wenn die Positionierhilfen stabförmig sind, lassen Sie sich besonders einfach zum Positionieren und auch zum Transportieren der Komponenten einsetzen. Dies wird besonders dann deutlich, wenn als Positionierhilfen Zentralelektroden eingesetzt werden. Diese werden in der Praxis oft auch als Mandrenen bezeichnet. Eine stabförmige Positionierhilfe, beispielsweise eine Mandrene, kann in eine hierfür vorgesehene Aufnahme an der Komponente axial hineingefahren werden.

Wenn die Komponenten Einschweißports, Schlauchstücke für Ports oder Brechventile sind, dann weisen diese ohnehin schon eine schlauchförmige Eigenschaft auf, und zwar unabhängig von der Querschnittskontur des Schlauchs, also beispielsweise kreisrund oder vor allem rautenförmig oder mit abgerundeten Kanten.

An einer Rückseite der Anlage können die Komponenten auf die Zentralelektroden aufgesteckt werden oder anderweitig die Positionierhilfen mit den Komponenten bestückt werden. Die Rückseite der Anlage bietet sich deshalb besonders an, weil eine Komponentenzuführung dann auch an der Rückseite der Anlage angeordnet sein kann. Die Komponentenzuführung ist immer platzaufwändig. Auch muss sie üblicherweise gerade zur Herstellung von medizinischen Beuteln eine hohe Reinigungsfähigkeit und deshalb Zugänglichkeit aufweisen.

Falls die Komponenten einem aktiven Vorwärmprozess mittels eines Durchlaufs durch eine Heizstation unterworfen werden, wird vorgeschlagen, dass auch diese Heizstation auf der Rückseite der Anlage angeordnet ist.

Zum schnellen und dennoch präzischen Transport der Träger wird vorgeschlagen, dass die Träger schwimmend geführt werden und auf der Prozessstrecke in Stationen jeweils mit einer Zentrierung aufgenommen werden.

Die schwimmende Führung der Träger, also beispielsweise eine Führung der Träger mit einem Spiel von mehreren Millimetern, vor allem einem Spiel von mehreren Millimetern in verschiedene Achsrichtungen, ermöglicht eine schnelle Fortbewegung der Träger bei kostengünstiger Aufhängung oder Lagerung. In jeder Station muss dann nur eine einzige oder eine geringe Anzahl an Zentrierungen vorgesehen sein, um dennoch eine besonders hohe Positionierpräzision für die Komponenten zu erreichen.

Die Träger können in einer Schiene geführt werden.

Schienensysteme sind am Markt vielfältig erhältlich. Beispielsweise sei an eine Schiene HepcoMotion Deutschland, 90537 Feucht, gedacht, der Prototyp des hiesigen Erfinders verwendet eine Schiene dieses Unternehmens mit einer geschliffenen V-Nut.

Es ist in einer bevorzugten Ausführungsform denkbar, dass die Träger entlang der Endlosbahn abschnittsweise in einer Schiene geführt werden und abschnittsweise aus der Schiene entfernt werden, insbesondere zum Führen einer Richtungsänderung.

So sieht ein Konzept des Erfinders vor, dass für die langstreckigen linearen Transporte, konkret entlang der Prozessstrecke und entlang der Rücklaufstrecke, jeweils eine lineare Schiene eingesetzt wird, um die Träger zu führen.

Zum Führen der Richtungsänderungen, konkret also zum Führen der beiden Richtungsumkehrungen an den beiden Stirnseiten der Anlage, ist es bevorzugt, wenn die Träger aus den Schienen hinausgeführt werden, beispielsweise ausgefädelt werden, dann die Richtungsumkehr vorgenommen wird, beispielsweise mit einer Wendestation, und die Träger wieder in die Führung der rückwärtigen Schiene eingebracht werden.

Selbstverständlich ist es auch denkbar, dass nur auf der Prozessstrecke oder nur auf der Rücklaufstrecke eine Schiene vorgesehen ist.

Auch ist selbstverständlich denkbar, dass nur ein Teil der Prozessstecke und/oder nur ein Teil der Rücklaufstrecke mit einer Schiene versehen ist.

Nach einem zweiten Aspekt der vorliegenden Erfindung löst die gestellte Aufgabe ein Verfahren zum Auswechseln einer Schar auszuwechselnder Positionierhilfen gegen eine Schar einzuwechselnde Positionierhilfen an einer Anlage zum Herstellen von medizinischen Beuteln mittels Durchführen des Verfahrens wie vorstehend beschrieben, wobei die auszuwechselnden Positionierhilfen von der Endlosbahn genommen werden und die einzuwechselnden Positionierhilfen in die Endlosbahn eingebracht werden.

Ein solches Verfahren kann besonders leicht dann durchgeführt werden, wenn die Positionierhilfen, vor allem ihre Träger, in Schienen geführt werden.

Es lässt sich vorstellen, dass die Positionierhilfen einzeln nacheinander, in Gruppen gleichzeitig oder alle gleichzeitig von der Endlosbahn genommen werden und bevorzugt ebenso wieder eingebracht werden.

So können beispielsweise entweder die Positionierhilfen sequenziell von den Trägern entfernt werden, oder die Träger können mit den Positionierhilfen sequenziell in einen Wartebahnhofsbereich oder einen Positionierhilfenwechselbereich gefahren werden.

Bei geschickter Gestaltung der Träger und der Positionierhilfen lassen sich die Positionierhilfen manuell oder sogar maschinell wechseln, ohne dass für zwei Scharen Positionierhilfen auch zwei Scharen Träger vorgesehen sein müssen. Vielmehr sieht die bevorzugte Ausführungsform der Erfindung vor, dass nur eine Schar Träger vorgesehen ist, bei gleichzeitigem Vorhandensein mehrerer Scharen Positionierhilfen; oder es sind zwei Scharen Träger vorhanden, bei mindestens zwei, bevorzugt mindestens drei, Scharen Positionierhilfen.

Jedenfalls sieht die bevorzugte Ausführungsform vor, dass weniger Scharen Träger als Scharen Positionierhilfen an der Anlage vorgesehen sind.

Zum Auswechseln der Positionierhilfen können die Träger ausgewechselt werden, oder die auszuwechselnden Positionierhilfen können von den Trägern entfernt werden und danach die einzuwechselnden Positionierhilfen auf dieselben Träger aufgebracht werden.

Falls die Positionierhilfen gemeinsam mit den Trägern ausgewechselt werden sollen, wird vorgeschlagen, dass die Träger über eine Weiche von der Endlosbahn hinuntergeleitet werden und dass die einzuwechselnden Positionierhilfen mit ihren Trägern über eine bevorzugt separate Weiche in die Endlosbahn eingebracht werden.

Nach einem dritten Aspekt der vorliegenden Erfindung löst die gestellte Aufgabe eine Anlage zum Herstellen von medizinischen Beuteln aus zwei Lagen Kunststofffolie und pro Beutel mindestens einer Komponente, mit einer Schar Positionierhilfen für die Komponenten, und mit einer Schar Träger für die Positionierhilfen, wobei die Positionierhilfen an den Trägern getragen sind, wobei die Anlage eine Führung für die Träger aufweist, welche dazu eingerichtet ist, die Träger in einer Endlosbahn zu transportieren, wobei die Anlage eine Komponentenapplizierstation aufweist, welche dazu eingerichtet ist, eine von einer Positionierhilfe mittels eines Trägers in die Station eingebrachte Komponente in eine Fügeverbindung mit der Kunststofffolie zu bringen, wobei sich die Anlage dadurch kennzeichnet, dass sie eine Steuerung aufweist, vor allem eine Regelung, wobei die Steuerung eine Wirkverbindung zum Transport der Träger aufweist und wobei die Steuerung die Träger auf ihrer Endlosbahn abwechselnd zunächst entlang einer Prozessstrecke und anschließend entlang einer Rücklaufstrecke zwischen einer ersten und einer zweiten Umkehrung führt, sie in der Prozessstrecke entweder Stoß an Stoß aneinandergereiht oder in Abständen zueinander transportiert, die Träger in der Rücklaufstrecke so stark in Rückführ-Richtung beschleunigt, dass sie sich schneller vom Einlauf in die Rücklaufstrecke entfernen als weitere Träger nach Durchlauf durch die Prozessstrecke in den Einlauf in die Rücklaufstrecke nachgeführt werden, um die Abstände zwischen den Trägern zu erhöhen, und die Träger zum intermittierenden Durchlaufen der Prozessstrecke wieder auf kleinere Abstände abbremst.

Es wurde vorstehend bereits zum ersten Aspekt der Erfindung erläutert, dass mit einer solchen Konstellation nur eine geringere Anzahl von Komponenten individuell abgestimmten Positionierhilfen vorgesehen werden muss als bisher bei der Herstellung von medizinischen Beuteln an der Anlage bekannt war.

Demgemäß wird vorgeschlagen, dass die Anlage Mittel aufweist, welche dazu eingerichtet sind, ein Verfahren wie vorstehend zum ersten und/oder zweiten Aspekt der Erfindung beschrieben durchzuführen.

Die Träger haben bevorzugt eine ausgeprägt zweidimensionale, flache Form. Dies ist dann der Fall, wenn die beiden Dimensionen der flächigen Erstreckung des Trägers zusammen mindestens das Dreifache, bevorzugt mindestens das Fünffache, der Dimension der Dicke der Träger haben.

Vor allem können die Träger puckartig geformt sein.

Eine puckartige Formung lässt an seiner Oberseite oder Unterseite relativ viel Befestigungsfläche. Auf einer der beiden Seiten kann demzufolge der Antrieb angeschlossen sein, beispielsweise ein Mitnehmer oder eine Kopplung für einen Mitnehmer; auf der anderen Seite kann die Halterung für die Positionierhilfe angeordnet sein.

Die Träger können demzufolge vor allem eine Tragseite aufweisen, wobei die Positionierhilfen an der Tragseite der Träger getragen werden.

Die Führung weist bevorzugt entlang der Endlosbahn eine Schiene auf.

Vor allem dann, wenn eine Schiene vorgesehen ist, kann die Führung eine umlaufende Transportkette aufweisen.

Wenn die Anlage eine Schlauchaufsteckstation aufweist, welche dazu eingerichtet ist, auf Zentralelektroden jeweils ein Röhrchen zum späteren Positionieren zum Einschweißen in die Lagen Kunststofffolie zum Bilden eines Ports im Beutel aufzustecken, dann entspricht die Anlage einer bevorzugten Ausführungsform der Erfindung, wenn die Zentralelektroden von Haltern getragen werden, wobei die Anlage eine Vorderseite, eine Rückseite und dazwischen zwei Stirnseiten aufweist, wobei sich die Endlosbahn entlang der Vorderseite und entlang der Rückseite erstreckt und an beiden Stirnseiten jeweils eine Dreheinheit aufweist, wobei die Vorderseite verschiedene Stationen zum Herstellen und gegebenenfalls Befüllen des Beutels aufweist und wobei die Führung dazu eingerichtet ist, auf der Vorderseite die Zentralelektroden intermittierend von Station zu Station in einer Vorderseitengeschwindigkeit zu verfahren und auf der Rückseite einen Rückhub der Halter in Richtung zur Schlauchaufsteckstation zu führen.

Es versteht sich, dass die Vorderseitengeschwindigkeit geringer sein soll als die Geschwindigkeit der Träger entlang der Rückseite der Anlage.

Es wurde bereits erläutert, dass die Führung eine Vielzahl elektronisch ansteuerbarer Magnete aufweisen kann, wobei die Träger magnetisch antreibbar gestaltet sein können und eine Regelung an der Anlage vorgesehen ist, welche die Istpositionen der Träger mit Sollpositionen abgleicht.

Um für die Träger möglichst wenig Reibungsverlust entlang des Transports zu erzeugen, wird vorgeschlagen, dass die Träger eine Gleit- oder Rollenlagerung entlang der Endlosbahn aufweisen.

Die Träger können jeweils in Rastverbindung mit einer oder mehreren Positionierhilfen stehen.

Um nur eine Schar Träger vorsehen zu müssen, jedenfalls aber weniger Träger vorsehen zu müssen als Positionierhilfen, empfiehlt es sich, die Positionierhilfen möglichst leicht zerstörungsfrei von den Trägern lösbar zu gestalten. Hierzu kann eine Rastverbindung dienen. Auch andere Verbindungsarten sind naturgemäß denkbar; der große Vorteil einer Rastverbindung ist allerdings, dass ein Verbinden von Positionierhilfe und Träger in sehr geringer Zeit erfolgen kann, jedenfalls schneller vonstattengeht als die jedenfalls auch denkbare Verbindungsart über Schrauben.

Im Falle einer Rastverbindung, aber auch ohne eine rastende Verbindung, wird vorgeschlagen, dass seitens der Endlosbahn Träger vorgesehen sind, die eine Zapfenaufnahme für die Positionierhilfen aufweisen, wobei die Positionierhilfen in die Zapfenaufnahmen einführbare Zapfen aufweisen.

Die Zapfen können vor allem gegen eine Federspannung eingeführt sein. Bei einer solchen Konstellation, gleich ob rastend oder nicht, hält die Kraft der Federspannung die Positionierhilfen in den Zapfenaufnahmen.

Um ein leichtes Wechseln der Positionierhilfen zu ermöglichen, wird vorgeschlagen, dass ein Auswerfer vorgesehen ist, um die Zapfen axial zu verschieben und die Positionierhilfen dadurch auszuwerfen.

Im Idealfall ist ein Auswerfer vorgesehen, an welchem die Positionierhilfen entlangfahren oder welcher an den Positionierhilfen entlangfährt, um das Auswerfen zu bewirken. Alternativ können auch die Halter jeweils einen Auswerfer aufweisen.

Die Erfindung wird nachstehend anhand eines Ausführungsbeispiels unter Bezugnahme auf die Zeichnung näher erläutert. In der Zeichnung zeigen
- Fig. 1: stark schematisch in einer Draufsicht ein erstes Anlagenkonzept,
- Fig. 2: in analoger Darstellung ein zweites Anlagenkonzept und
- Fig. 3: in einem Längsschnitt einen Zapfen für eine Positionierhilfe, eingeklemmt in einer Zapfenaufnahme seitens eines Halters.

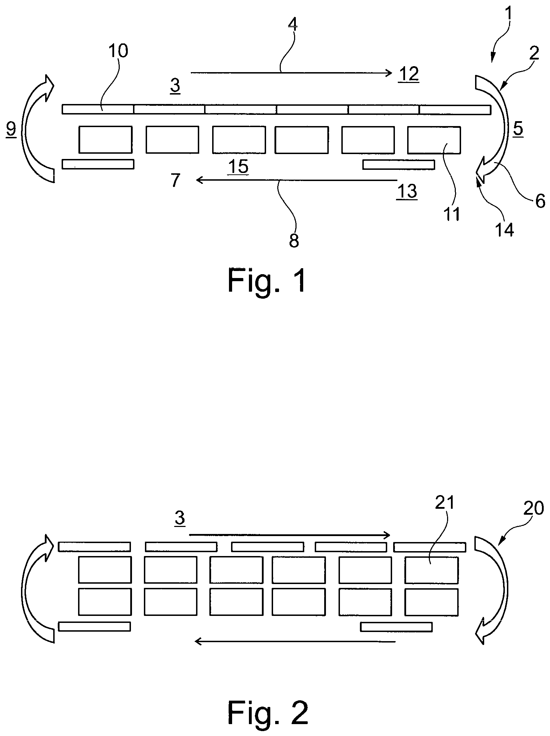

Das erste Anlagenkonzept 1 in Fig. 1 für eine Anlage zum Herstellen von medizinischen Beuteln transportiert Positionierhilfen in Form von Mandrenen, die auf Haltern angeordnet sind und mit diesen transportiert werden, entlang einer Endlosbahn 2, bestehend aus einem ersten linearen Transport entlang einer Prozessstrecke 3 in einer Prozess-Richtung 4, daran anschließend an einer ersten Stirnseite 5 eine erste Umkehrung 6, daran anschließend eine Rücklaufstrecke 7 für eine Rückführ-Richtung 8 im Eilgang und daran anschließend wieder eine zweite Umkehrung 9.

Als Grundkörper ausgebildete Träger 10 (exemplarisch beziffert, nicht im Detail dargestellt) werden an der Prozessstrecke 3 und an der Rücklaufstrecke 7 jeweils in einer Schiene geführt und seitlich über Rollen abgestützt. An der ersten Stirnseite 5 und an der zweiten Stirnseite finden sich jeweils eine Umkehrung, jeweils ausgeführt als eine Dreheinheit.

In der Prozess-Richtung 4 werden die Träger 10 über Pusher aktiv vorgeschoben, und zwar synchronisiert mit dem Folienvorschub. Die Träger 10 werden dazu in Prozess-Richtung 4 auf Stoß aneinandergereiht und durchgeschoben bis zum Ende der Prozessstrecke 3, also bis zum Beginn der ersten Umkehrung 6 an der ersten Stirnseite 5.

Nach Durchlauf durch die erste Umkehrung 6 werden die Träger 10 jedoch mittels eines Linearmotor-Antriebs (nicht im Einzelnen dargestellt, exemplarisch jedoch über regelbare Magnetfeldgeber 11 ermöglicht) im Eilgang zurückgeführt.

Obwohl im dargestellten ersten Anlagenkonzept 1 die Prozessstrecke 3 und die Rücklaufstrecke 7 gleichlang sind, nämlich genauso lang wie die gesamte Anlage an ihrer Vorderseite 12 und an ihrer Rückseite 13, werden die Träger 10 in der Rücklaufstrecke 7 so stark in Rückführ-Richtung 8 beschleunigt, dass sie sich schneller vom Einlauf 14 in die Rücklaufstrecke entfernen als weitere Träger 10 nach Durchlauf durch die Prozessstrecke 3 und kommend aus der ersten Umkehrung 6 in den Einlauf 14 in die Rücklaufstrecke nachgeführt werden. Dadurch erhöhen sich die Abstände 15 zwischen den Trägern 10. Anders herum befinden sich zwar an der Vorderseite 12 in der Prozessstrecke 3 im dargestellten, stark vereinfachten Konzept sechs Träger 10, auf der identisch langen Rücklaufstrecke 7 jedoch nur zwei Träger 10.

Der gesamte erforderliche Bestand an produktspezifisch gestalteten Trägern 10 befindet sich also im Wesentlichen in der Prozessstrecke 3. Mit anderen Worten sind nur sehr wenige Träger 10 mehr in der gesamten Endlosbahn 2 erforderlich, als ohnehin in der Prozessstrecke 3 zum Durchlaufen des Fügeprozesses und weiteren Herstellprozesses erforderlich sind.

Im zweiten Anlagenkonzept 20 in Fig. 2 kann die Anlage prinzipiell identisch aufgebaut sein. Jedoch ist auch entlang der Prozessstrecke 3 ein aktiver Vorschub vorgesehen, hier ermöglicht über weitere Magnetfeldgeber 21 (exemplarisch beziffert). Entsprechend Linearmotortechnik kann zwei Primärteilstränge aufweisen, nämlich jeweils einen Teilstrang für den Hintransport und einen Teilstrang für den Rücktransport im Eilgang.

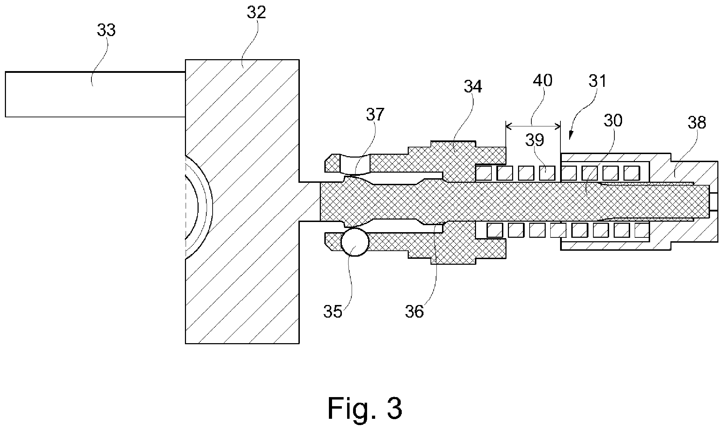

Der Zapfen 30 in Fig. 3 sitzt in einer Zapfenaufnahme 31.

Die Zapfenaufnahme 31 ist dazu vorgesehen, umlaufseitig an einem Träger (nicht dargestellt) befestigt zu werden. Die Zapfenaufnahme 31 bzw. ihr Träger wird dann angetrieben, um letztendlich die Positionierhilfe (nicht dargestellt) zu positionieren.

Der Zapfen 30 ist mit der Positionierhilfe, beispielsweise einem Mandrenenhalter 32, fest verbunden. Der Mandrenenhalter 32 trägt seinerseits eine Mandrene 33.

Die Zapfenaufnahme 31 weist eine Hülse 34 auf, in welcher ein Federring 35 verschiebefest angeordnet ist.

Der Zapfen 30 weist einerseits eine Anschlagschulter 36 und andererseits eine Federschiebeschulter 37 auf.

Zudem weist die Zapfenaufnahme 31 eine zweite Hülse 38 auf, die axial verschieblich gegen eine Spiralfeder 39 gelagert ist.

Die zweite Hülse 38 hat somit gegen die Kraft der Spiralfeder 39 einen Spielhub 40.

Um zum Betrieb der Anlage (nicht dargestellt) einen Mandrenenhalter 32 mit seinem Zapfen 30 in der Zapfenaufnahme 31 und somit am Träger (nicht dargestellt) zu positionieren, wird der Zapfen 30 axial in die Zapfenaufnahme 31 eingesteckt. Sobald die Federschiebeschulter 37 am Federring 35 anstößt, steigt die dazu erforderliche Kraft an. Dies führt zu einem Einklemmen der Federschiebeschulter 37 und somit des gesamten Zapfens 30 in der Zapfenaufnahme 31.

In dieser Position ist der Mandrenenhalter 32 mit seiner Mandrene 30 in einer durch die Geometrie und die Materialwahl aus Federring 35 und Federschiebeschulter 37 fest gelagert.

Auf Wunsch kann eine Verrastung vorgesehen werden, also ein Wiederabfallen der erforderlichen Einschiebekraft nach Überwinden einer Maximalkraft. Die Federschiebeschulter 37 müsste hierfür beispielsweise nach hinten wieder abgeflacht werden.

Wenn die Schar Mandrenenhalter 32 aus der Schar Träger (nicht dargestellt) ausgeworfen werden soll, um eine geänderte Schar Mandrenenhalter oder andere Positionierhilfen in die Zapfenaufnahmen 31 an den Trägern einzusetzen, dann kann die zweite Hülse 38 gegen die Federkraft der Spiralfeder 39 betätigt werden, bevorzugt maschinell. Es kann hierzu beispielsweise eine Kulisse angefahren werden. Durch die axiale Bewegung der zweiten Hülse 38 wirft die zweite Hülse 38 den Zapfen 30 aus, sobald die Klemmkraft zwischen der Federschiebeschulter 37 und dem Federring 35 abgebaut ist. Die Mandrenenhalter können dann leicht entnommen werden, und andere Positionierhilfen können eingesetzt werden.

Mit anderen Worten:
Der hier vorgeschlagene BagMaker, also die Anlage zum Herstellen von Beuteln, verwendet Mandrenen als Positionierhilfe. Das Ganze ist derart gestaltet, dass statt einer festen Anordnung der Mandrenen an Riemen oder Kette oder andrem starren Verbund für die hier vorliegende Erfindung folgendermaßen vorgehen:
Die Mandrenen sind als einzelne Pucks bzw. auf einer mehr oder weniger starren Führung bewegliche Träger (z.B. Linearführung oder auch nur grobe Führung durch Begrenzungsbleche wie bei einem Magnetantrieb-System) ausgeführt. Darauf sitzen die Mandrenen, die produktspezifisch ausgeführt sind.

Die Mandrenen sind auf dem Puck entweder fest verschraubt oder mit Schnellwechsel-Verschluss befestigt. Beim Musterwechsel kann dann der ganze Träger (inkl. Führung) und Mandrene herausgenommen werden oder auf ein Abstellgleis oder in einen Pufferspeicher gefahren werden. Oder bei einem Schnellwechsel-Feature wird nur das Oberteil umgeclipst.

Das Ganze ist aufgebaut wie heute als Kreislauf oder ähnlich.

Prozessseitig werden die Wagen noch durch den Folienvorschub mit durch den Prozess geschoben. Dazu koppelt der Folienvorschub über Fängerstifte oder ein anderes Koppelglied den Mandrenenträger an den Folienvorschub.

Die Rückführung am Prozessende erfolgt über einen aktiven Mechanismus (z.B. Linearmotortechnik, Riemen (Reibriemen oder mit Koppelglied, Pusher,....).

Auf dem Rückhub können, wie bisher, Reinigung von den Mandrenen, Aufstecken der Schläuche oder Ports, Vorwärmen derselben, etc. stattfinden.

Das Ganze wäre anwendbar für Hochfrequenz- und Thermokontakt-Schweiß-Beutelherstellmethoden.

### Liste der verwendeten Bezugszeichen

- 1: Erstes Anlagenkonzept
- 2: Endlosbahn
- 3: Prozessstrecke
- 4: Prozess-Richtung
- 5: Erste Stirnseite
- 6: Erste Umkehrung
- 7: Rücklaufstrecke
- 8: Rückführ-Richtung
- 9: Zweite Umkehrung
- 10: Träger
- 11: Magnetfeldgeber
- 12: Vorderseite
- 13: Rückseite
- 14: Einlauf in die Rücklaufstrecke
- 15: Abstand
- 20: Zweites Anlagenkonzept
- 21: Weitere Magnetfeldgeber
- 30: Zapfen
- 31: Zapfenaufnahme
- 32: Mandrenenhalter
- 33: Mandrene
- 34: Hülse
- 35: Federring
- 36: Anschlagschulter
- 37: Federschiebeschulter
- 38: Zweite Hülse
- 39: Spiralfeder
- 40: Spielhub

## Patentansprüche

1. Verfahren zum Herstellen von medizinischen Beuteln an einer Anlage, aus zwei Lagen Kunststofffolie und pro Beutel mindestens einer Komponente,
mit einer Schar Positionierhilfen für die Komponenten,
und mit einer Schar Träger (10) für die Positionierhilfen, wobei die Positionierhilfen an den Trägern (10) getragen werden,
wobei die Träger (10) mittels einer Führung in einer Endlosbahn (2) transportiert werden,
wobei die Anlage eine Komponentenapplizierstation aufweist, die dazu eingerichtet ist, eine von einer Positionierhilfe mittels eines Trägers (10) in die Station eingebrachte Komponente in eine Fügeverbindung mit der Kunststofffolie zu bringen,
***dadurch gekennzeichnet, dass***
die Träger (10) auf ihrer Endlosbahn (2) abwechselnd zunächst entlang einer Prozessstrecke (3) und anschließend entlang einer Rücklaufstrecke (7) zwischen einer ersten und einer zweiten Umkehrung (6, 9) geführt werden, wobei die Träger (10) in der Prozessstrecke (3) entweder auf Stoß aneinandergereiht sind oder Abstände (15) zueinander haben, wobei die Träger (10) in der Rücklaufstrecke (7) so stark in Rückführ-Richtung (8) beschleunigt werden, dass sie sich schneller vom Einlauf (14) in die Rücklaufstrecke (7) entfernen als weitere Träger (10) nach Durchlauf durch die Prozessstrecke (3) in den Einlauf (14) in die Rücklaufstrecke (7) nachgeführt werden, um die Abstände (15) zwischen den Trägern (10) zu erhöhen, und wobei die Träger (10) zum intermittierenden Durchlaufen der Prozessstrecke (3) wieder auf kleinere Abstände (15) gebremst werden.

2. Verfahren nach Anspruch 1, ***dadurch gekennzeichnet, dass*** die Träger (10) entlang der Rücklaufstrecke (7) in einer durchgehenden Bewegung geführt werden.

3. Verfahren nach Anspruch 1 oder 2, ***dadurch gekennzeichnet, dass*** die Träger (10) entlang der Prozessstrecke (3) mit einem intermittierenden Folienvorschub gekoppelt werden und für den Rücklauf entlang der Rücklaufstrecke (7) vom intermittierenden Folienvorschub entkoppelt werden.

4. Verfahren nach Anspruch 3, ***dadurch gekennzeichnet, dass*** die Kopplung mittels eines mechanischen Koppelglieds erfolgt.

5. Verfahren nach einem der Ansprüche 3 oder 4, ***dadurch gekennzeichnet, dass*** die Träger (10) für den intermittierenden Vorschub von Mitnehmern mitgenommen werden, insbesondere von an einem festen Umlaufband fixierten Mitnehmern.

6. Verfahren nach einem der vorstehenden Ansprüche, ***dadurch gekennzeichnet, dass*** die Träger (10) auf der Prozessstrecke (3) für den intermittierenden Vorschub mittels eines eigenen Antriebsmittels angetrieben werden, vor allem eines Motors oder eines Permanentmagneten.

7. Verfahren nach einem der vorstehenden Ansprüche, ***dadurch gekennzeichnet, dass*** die Träger (10) auf der Prozessstrecke (3) mittels einer elektronischen Kopplung gekoppelt werden.

8. Verfahren nach Anspruch 7, ***dadurch gekennzeichnet, dass*** die Träger (10) an einen virtuellen Master mittels einer Master-Slave-Steuerung gekoppelt sind.

9. Verfahren nach einem der vorstehenden Ansprüche, ***dadurch gekennzeichnet, dass*** die Träger (10) zum Durchlaufen der Rücklaufstrecke (7) mit einer Schnelltransportmechanik gekoppelt werden, beispielsweise aufweisend einen Linearmotor, einen Riemen wie beispielsweise einen Reibriemen oder einen Pusher.

10. Verfahren nach einem der vorstehenden Ansprüche, ***dadurch gekennzeichnet, dass*** an einer Rückseite (13) der Anlage die Positionierhilfen gereinigt werden.

11. Verfahren nach einem der vorstehenden Ansprüche, ***dadurch gekennzeichnet, dass*** Positionierhilfen die Komponenten zwischen die zwei Lagen Kunststofffolie positionieren und der Fügeprozess in der Komponentenapplizierstation die Komponenten mit den zwei Lagen Kunststofffolie fest verbindet.

12. Verfahren nach einem der vorstehenden Ansprüche, ***dadurch gekennzeichnet, dass*** die Positionierhilfen stabförmig sind, insbesondere Zentralelektroden sind.

13. Verfahren nach einem der vorstehenden Ansprüche, ***dadurch gekennzeichnet, dass*** die Komponenten Einschweißports, Schlauchstücke für Ports oder Brechventile sind.

14. Verfahren nach einem der vorstehenden Ansprüche, ***dadurch gekennzeichnet, dass*** auf der Rückseite (13) der Anlage die Komponenten auf die Zentralelektroden aufgesteckt werden.

15. Verfahren nach einem der vorstehenden Ansprüche, ***dadurch gekennzeichnet, dass*** auf der Rückseite (13) der Anlage die Komponenten einem aktiven Vorwärmprozess mittels eines Durchlaufs durch eine Heizstation unterworfen werden.

16. Verfahren nach einem der vorstehenden Ansprüche, ***dadurch gekennzeichnet, dass*** die Träger (10) schwimmend geführt werden und auf der Prozessstrecke (3) in Stationen jeweils mit einer Zentrierung aufgenommen werden.

17. Verfahren nach einem der vorstehenden Ansprüche, ***dadurch gekennzeichnet, dass*** die Träger (10) in einer Schiene geführt werden.

18. Verfahren nach Anspruch 17, ***dadurch gekennzeichnet, dass*** die Träger (10) entlang der Endlosbahn (2) abschnittsweise in der Schiene geführt werden und abschnittsweise aus der Schiene entfernt werden, insbesondere zum Führen einer Richtungsänderung.

19. Verfahren zum Auswechseln einer Schar auszuwechselnder Positionierhilfen gegen eine Schar einzuwechselnde Positionierhilfen an einer Anlage zum Herstellen von medizinischen Beuteln mittels Durchführen des Verfahrens nach einem der vorstehenden Ansprüche, wobei
- die auszuwechselnden Positionierhilfen von der Endlosbahn (2) genommen werden, und
- die einzuwechselnden Positionierhilfen in die Endlosbahn (2) gebracht werden.

20. Verfahren nach Anspruch 19, ***dadurch gekennzeichnet, dass*** zum Auswechseln die Träger (10) ausgewechselt werden.

21. Verfahren nach Anspruch 20, ***dadurch gekennzeichnet, dass*** zum Auswechseln die auszuwechselnden Positionierhilfen von den Trägern (10) entfernt werden und danach die einzuwechselnden Positionierhilfen auf die Träger (10) gebracht werden.

22. Anlage zum Herstellen von medizinischen Beuteln aus zwei Lagen Kunststofffolie und pro Beutel mindestens einer Komponente,
mit einer Schar Positionierhilfen für die Komponenten,
und mit einer Schar Träger (10) für die Positionierhilfen, wobei die Positionierhilfen an den Trägern (10) getragen sind,
wobei die Anlage eine Führung für die Träger (10) aufweist, welche dazu eingerichtet ist, die Träger (10) in einer Endlosbahn (2) zu transportieren,
wobei die Anlage eine Komponentenapplizierstation aufweist, die dazu eingerichtet ist, eine von einer Positionierhilfe mittels eines Trägers (10) in die Station eingebrachte Komponente in eine Fügeverbindung mit der Kunststofffolie zu bringen,
***dadurch gekennzeichnet, dass***
die Anlage eine Steuerung aufweist, wobei die Steuerung eine Wirkverbindung zum Transport der Träger (10) aufweist,
wobei die Steuerung,
die Träger (10) auf ihrer Endlosbahn (2) abwechselnd zunächst entlang einer Prozessstrecke (3) und anschließend entlang einer Rücklaufstrecke (7) zwischen einer ersten und einer zweiten Umkehrung (6, 9)führt, die Träger (10) in der Prozessstrecke (3) entweder auf Stoß aneinandergereiht oder in Abständen (15) zueinander transportiert, die Träger (10) in der Rücklaufstrecke (7) so stark in Rückführ-Richtung (8) beschleunigt, dass sie sich schneller vom Einlauf (14) in die Rücklaufstrecke (7) entfernen als weitere Träger (10) nach Durchlauf durch die Prozessstrecke (3) in den Einlauf (14) in die Rücklaufstrecke (7) nachgeführt werden, um die Abstände (15) zwischen den Trägern (10) zu erhöhen, und die Träger (10) zum intermittierenden Durchlaufen der Prozessstrecke (3) wieder auf kleinere Abstände (15) abbremst.

23. Anlage nach Anspruch 22, ***dadurch gekennzeichnet, dass*** die Träger (10) eine ausgeprägt zweidimensionale, flache Form haben.

24. Anlage nach Anspruch 23, ***dadurch gekennzeichnet, dass*** die Träger (10) puckartig geformt sind.

25. Anlage nach Anspruch 23 oder 24, ***dadurch gekennzeichnet, dass*** die Träger (10) eine Tragseite aufweisen, wobei die Positionierhilfen an der Tragseite der Träger (10) getragen werden.

26. Anlage nach einem der Ansprüche 22 bis 25, ***dadurch gekennzeichnet, dass*** die Führung eine Schiene entlang der Endlosbahn (2) aufweist.

27. Anlage nach einem der Ansprüche 22 bis 26, ***dadurch gekennzeichnet, dass*** die Führung eine umlaufende Transportkette aufweist.

28. Anlage nach einem der Ansprüche 22 bis 27, ***dadurch gekennzeichnet, dass*** die Anlage eine Schlauchaufsteckstation aufweist, die dazu eingerichtet ist, auf Zentralelektroden jeweils ein Röhrchen zum späteren Positionieren zum Einschweißen in die Lagen Kunststofffolie zum Bilden eines Ports im Beutel aufzustecken, wobei die Zentralelektroden von Haltern getragen werden,
wobei die Anlage eine Vorderseite (12), eine Rückseite (13) und dazwischen zwei Stirnseiten aufweist, wobei sich die Endlosbahn (2) entlang der Vorderseite (12) und entlang der Rückseite (13) erstreckt und an beiden Stirnseiten jeweils eine Dreheinheit aufweist,
wobei die Vorderseite (12) verschiedene Stationen zum Herstellen und ggf. Befüllen des Beutels aufweist und
wobei die Führung dazu eingerichtet ist, auf der Vorderseite (12) die Zentralelektroden intermittierend von Station zu Station in einer Vorderseitengeschwindigkeit zu verfahren und auf der Rückseite (13) einen Rückhub der Halter in Richtung zur Schlauchaufsteckstation zu führen.

29. Anlage nach einem der Ansprüche 22 bis 28, ***dadurch gekennzeichnet, dass*** die Führung eine Vielzahl elektronisch ansteuerbarer Magnete aufweist, wobei die Träger (10) magnetisch antreibbar gestaltet sind.

30. Anlage nach einem der Ansprüche 22 bis 29, ***dadurch gekennzeichnet, dass*** die Träger (10) eine Gleit- oder Rollenlagerung entlang der Endlosbahn (2) aufweisen.

31. Anlage nach einem der Ansprüche 22 bis 30, ***dadurch gekennzeichnet, dass*** die Träger (10) jeweils in Rastverbindung mit der Positionierhilfe stehen.

32. Anlage nach einem der Ansprüche 22 bis 31, ***dadurch gekennzeichnet, dass*** seitens der Endlosbahn (2) Halter vorgesehen sind, die eine Zapfenaufnahme (31) für die Positionierhilfen aufweisen, wobei die Positionierhilfen in die Zapfenaufnahmen (31) einführbare Zapfen (30) aufweisen.

33. Anlage nach Anspruch 32, ***dadurch gekennzeichnet, dass*** die Zapfen (30) gegen eine Federspannung in die Zapfenaufnahmen (31) eingeführt sind.

34. Anlage nach Anspruch 33 oder 33, ***dadurch gekennzeichnet, dass*** ein Auswerfer vorgesehen ist, um die Zapfen (30) axial zu verschieben und die Positionierhilfen dadurch auszuwerfen.

## Claims

1. Method for producing medical pouches in a plant, consisting of two layers of plastic film and at least one component per pouch,
having a band of positioning aids for the components,
and having a band of carriers (10) for the positioning aids, the positioning aids being carried at the carriers (10),
the carriers (10) being translated in an endless path (2) by means of a guide,
the plant having a component application station adapted to bring a component introduced into the station by a positioning aid by means of a carrier (10) into a joint with the plastic film,
***characterized in that***
the carriers (10) are alternately guided between a first and a second reversing unit (6, 9) on their endless path (2), first along a process path (3) and then along a return path (7),
the carriers (10) in the process path (3) being either arranged in series abutting against each other or having interspaces (15) between them; the carriers (10) on the return path (7) being accelerated in the return direction (8) to the point that they leave the inlet (14) into the return path (7) faster than additional carriers (10) are fed into the return path (7) through the inlet (14) after having passed through the process path (3), so as to increase the interspaces (15) between the carriers (10), and the carriers (10) being braked down again to form smaller interspaces (15) for intermittently passing through the process path (3).

2. Method according to Claim 1, ***characterized in that*** the carriers (10) are guided along the return path (7) in a continuous movement.

3. Method according to Claim 1 or 2, ***characterized in that*** the carriers (10) are coupled to an intermittent film feed along the process path (3) and uncoupled from the intermittent film feed for the return along the return path (7).

4. Method according to Claim 3, ***characterized in that*** coupling takes place by means of a mechanical coupling member.

5. Method according to one of Claims 3 or 4, ***characterized in that*** the carriers (10) are entrained for intermittent feed by pusher dogs, in particular pusher dogs fastened to a fixed endless belt.

6. Method according to one of the above Claims, ***characterized in that*** the carriers (10) are driven by a separate driving means on the process path (3) for intermittent feed, in particular by a motor or a permanent magnet.

7. Method according to one of the above Claims, ***characterized in that*** the carriers (10) are coupled on the process path (3) by means of electronic coupling.

8. Method according to Claim 7, ***characterized in that*** the carriers (10) are coupled to a virtual master by means of a master-slave controller.

9. Method according to one of the above Claims, ***characterized in that*** for passing through the return path (7), the carriers (10) are coupled to a mechanical fast transport system, for instance having a linear motor, a belt, such as e. g. a friction belt, or a pusher.

10. Method according to one of the above Claims, ***characterized in that*** at a rear side (13) of the plant, the positioning aids are cleaned.

11. Method according to one of the above Claims, ***characterized in that*** positioning aids position the components between the two layers of plastic film and the joining process in the component application station firmly connects the components to the two layers of plastic film.

12. Method according to one of the above Claims, ***characterized in that*** the positioning aids are rod-shaped and are in particular central electrodes.

13. Method according to one of the above Claims, ***characterized in that*** the components are welding ports, tube pieces for ports or break-open valves.

14. Method according to one of the above Claims, ***characterized in that*** on the rear side (13) of the plant, the components are plugged onto the central electrode.

15. Method according to one of the above Claims, ***characterized in that*** on the rear side (13) of the plant, the components are subjected to an active preheating process by passing through a heating station.

16. Method according to one of the above Claims, ***characterized in that*** the carriers (10) are guided floatingly and are received in the process path (3) in stations with one centering device each.

17. Method according to one of the above Claims, ***characterized in that*** the carriers (10) are guided in a rail.

18. Method according to Claim 17, ***characterized in that*** the carriers (10) are guided in portions in the rail along the endless path (2) and are removed in portions from the rail, in particular for guiding a change of direction.

19. Method of replacing a band of positioning aids to be replaced by a band of positioning aids to be newly inserted in a plant for producing medical pouches by performing the method according to one of the above Claims, wherein
- the positioning aids to be replaced are removed from the endless path (2) and
- the positioning aids to be newly inserted are placed in the endless path (2).

20. Method according to Claim 19, ***characterized in that*** for replacement, the carriers (10) are replaced.

21. Method according to Claim 20, ***characterized in that*** for replacement, the positioning aids to be replaced are removed from the carriers (10) and subsequently, the positioning aids to be newly inserted are placed on the carriers (10).

22. Plant for producing medical pouches consisting of two layers of plastic film and at least one component per pouch,
having a band of positioning aids for the components,
and having a band of carriers (10) for the positioning aids, the positioning aids being carried at the carriers (10),
the plant having a guide for the carriers (10) which is adapted to translate the carriers (10) in an endless path (2),
the plant having a component application station adapted to bring a component introduced into the station by a positioning aid by means of a carrier (10) into a joint with the plastic film,
***characterized in that***
the plant has a controller, the controller being in operative connection with the transport mechanism of the carriers (10),
wherein the controller guides the carriers (10) on their endless path (2) alternately between a first and a second reversing unit (6, 9), first along a process path (3) and then along a return path (7),
the carriers (10) in the process path (3) being either arranged in series abutting against each other or translated with interspaces (15) between them; the carriers (10) on the return path (7) being accelerated in the return direction (8) to the point that they leave the inlet (14) into the return path (7) faster than additional carriers (10) are fed into the return path (7) through the inlet (14) after having passed through the process path (3), so as to increase the interspaces (15) between the carriers (10), and the carriers (10) being braked down again to form smaller interspaces (15) for intermittently passing through the process path (3).

23. Plant according to Claim 22, ***characterized in that*** the carriers (10) have a defined two-dimensional, flat shape.

24. Plant according to Claim 23, ***characterized in that*** the carriers (10) are puck-shaped.

25. Plant according to Claim 23 or 24, ***characterized in that*** the carriers (10) have a carrying side, the positioning aids being carried at the carrying side of the carriers (10).

26. Plant according to one of Claims 22 through 25, ***characterized in that*** the guide has a rail along the endless path (2).

27. Plant according to one of Claims 22 through 26, ***characterized in that*** the guide has a circulating transport chain.

28. Plant according to one of Claims 22 through 27, ***characterized in that*** the plant has a tube plug-on station adapted to plug on one small tube each onto central electrodes for subsequent positioning for welding into the layers of plastic film in order to form a port in the pouch,
the central electrodes being carried by carriers,
the plant having a front side (12), a rear side (13) and two face sides in between, with the endless path (2) extending along the front side (12) and along the rear side (13) and having one reversing unit on both face sides each,
the front side (12) having various stations for manufacturing and, if desired, filling the pouch, and
the guide being adapted to translate the central electrodes intermittently on the front side (12) from station to station at a front side velocity and to guide, on the rear side (13), a return of the carriers in the direction towards the tube plug-on station.

29. Plant according to one of Claims 22 through 28, ***characterized in that*** the guide has a plurality of electronically controllable magnets, with the carriers (10) being embodied to be controllable by magnets.

30. Plant according to one of Claims 22 through 29, ***characterized in that*** the carriers (10) have a plain bearing or roller bearing along the endless path (2).

31. Plant according to one of Claims 22 through 30, ***characterized in that*** the carriers (10) each have a snap-lock connection to the positioning aid.

32. Plant according to one of Claims 22 through 31, ***characterized in that*** carriers are provided on the endless path (2) which have a tap receptacle (31) for the positioning aids, the positioning aids having taps (30) insertable into the tap receptacles (31).

33. Plant according to Claim 32, ***characterized in that*** the taps (30) are inserted into the tap receptacles (31) in contrast to a spring tension.

34. Plant according to Claim 33 or 33, ***characterized in that*** an ejector is provided for axially displacing the taps (30), ejecting the positioning aids in this manner.

## Revendications

1. Procédé de fabrication de sacs médicaux dans une installation, à partir de deux couches de film plastique et par sac au moins un composant,
avec un ensemble d'accessoires de positionnement pour les composants,
et avec un ensemble de supports (10) pour les accessoires de positionnement, les accessoires de positionnement étant portés sur les supports (10),
dans lequel les supports (10) sont transportés sur une bande sans fin (2) au moyen d'un guidage,
dans lequel l'installation présente une station d'application de composants, laquelle est configurée pour assembler un composant introduit dans la station par un accessoire de positionnement au moyen d'un support (10) dans une jointure avec le film plastique,
**caractérisé en ce que**
les supports (10) sont guidés sur leur bande sans fin (2) alternativement tout d'abord le long d'un trajet de traitement (3), puis le long d'un trajet de retour (7), entre une première et une deuxième déviation (6, 9),
dans lequel les supports (10) sur le trajet de traitement (3) sont alignés bout à bout ou présentent des intervalles (15) entre eux, dans lequel les supports (10) sont accélérés si fortement dans la direction de renvoi (8) sur le trajet de retour (7), qu'ils s'éloignent plus vite de l'entrée (14) sur le trajet de retour (7) que d'autres supports (10) ne sont guidés à la suite sur le trajet de retour (7) par l'entrée (14) après leur passage à travers le trajet de traitement (3), afin d'augmenter les intervalles (15) entre les supports (10), et dans lequel les supports (10) sont de nouveau limités à des intervalles (15) plus petits pour le passage intermittent à travers le trajet de traitement (3).

2. Procédé selon la revendication 1, **caractérisé en ce que** les supports (10) sont guidés le long du trajet de retour (7) selon un déplacement continu.

3. Procédé selon la revendication 1 ou 2, **caractérisé en ce que** les supports (10) sont accouplés avec une poussée de film intermittente le long du trajet de traitement (3) et sont désaccouplés de la poussée de film intermittente pour le retour le long du trajet de retour (7).

4. Procédé selon la revendication 3, **caractérisé en ce que** l'accouplement est réalisé au moyen d'un organe d'accouplement mécanique.

5. Procédé selon l'une des revendications 3 ou 4, **caractérisé en ce que** les supports (10) sont emportés par des entraîneurs pour la poussée intermittente, en particulier par des entraîneurs fixés sur une bande circulante fixe.

6. Procédé selon l'une des revendications précédentes, **caractérisé en ce que** les supports (10) sont entraînés par un moyen d'entraînement propre pour la poussée intermittente sur le trajet de traitement (3), notamment par un moteur ou un aimant permanent.

7. Procédé selon l'une des revendications précédentes, **caractérisé en ce que** les supports (10) sont accouplés à l'aide d'un accouplement électronique sur le trajet de traitement (3).

8. Procédé selon la revendication 7, **caractérisé en ce que** les supports (10) sont accouplés à un maître virtuel à l'aide d'une commande maître-esclave.

9. Procédé selon l'une des revendications précédentes, **caractérisé en ce que** pour leur passage à travers le trajet de retour (7), les supports (10) sont accouplés à une mécanique de transport rapide présentant par exemple un moteur linéaire, une courroie telle que par exemple une courroie à friction ou un poussoir.

10. Procédé selon l'une des revendications précédentes, **caractérisé en ce que** les accessoires de positionnement sont nettoyés sur un côté arrière (13) de l'installation.

11. Procédé selon l'une des revendications précédentes, **caractérisé en ce que** les accessoires de positionnement positionnent les composants entre les deux couches de film plastique et le processus d'assemblage dans la station d'application de composants relie fixement les composants aux deux couches de film plastique.

12. Procédé selon l'une des revendications précédentes, **caractérisé en ce que** les accessoires de positionnement sont en forme de tige, en particulier des électrodes centrales.

13. Procédé selon l'une des revendications précédentes, **caractérisé en ce que** les composants sont des orifices de soudage, des morceaux de tuyau pour orifices ou des soupapes de rupture.

14. Procédé selon l'une des revendications précédentes, **caractérisé en ce que** sur le côté arrière (13) de l'installation, les composants sont emboîtés sur les électrodes centrales.

15. Procédé selon l'une des revendications précédentes, **caractérisé en ce que** sur le côté arrière (13) de l'installation, les composants sont soumis à un processus de préchauffage actif au moyen d'un passage à travers une station de chauffage.

16. Procédé selon l'une des revendications précédentes, **caractérisé en ce que** les supports (10) sont guidés de façon flottante et reçus respectivement avec un centrage dans des stations sur le trajet de traitement (3).

17. Procédé selon l'une des revendications précédentes, **caractérisé en ce que** les supports (10) sont guidés dans un rail.

18. Procédé selon la revendication 17, **caractérisé en ce que** les supports (10) sont guidés partiellement dans le rail le long de la bande sans fin (2) et sont retirés partiellement hors du rail, en particulier pour le guidage d'un changement de direction.

19. Procédé pour le remplacement d'un ensemble d'accessoires de positionnement à remplacer par un ensemble d'accessoires de positionnement à monter sur une installation pour la fabrication de sacs médicaux à l'aide d'un procédé selon l'une des revendications précédentes, dans lequel
- les accessoires de positionnement à remplacer sont retirés de la bande sans fin (2), et
- les accessoires de positionnement à monter sont placés sur la bande sans fin (2).

20. Procédé selon la revendication 19, **caractérisé en ce que** pour le remplacement, les supports (10) sont remplacés.

21. Procédé selon la revendication 20, **caractérisé en ce que** pour le remplacement, les accessoires de positionnement à remplacer sont éloignés des supports (10), puis les accessoires de positionnement à monter sont placés sur les supports (10).

22. Installation pour la fabrication de sacs médicaux à partir de deux couches de film plastique et par sac au moins un composant,
avec un ensemble d'accessoires de positionnement pour les composants,
et avec un ensemble de supports (10) pour les accessoires de positionnement, les accessoires de positionnement étant portés sur les supports (10),
dans laquelle l'installation présente un guidage pour les supports (10), lequel est destiné au transport des supports (10) sur une bande sans fin (2),
dans laquelle l'installation présente une station d'application de composants configurée pour assembler un composant introduit dans la station par un accessoire de positionnement au moyen d'un support (10) au film plastique, **caractérisée en ce que**
l'installation présente une commande, la commande présentant une liaison fonctionnelle avec le transport des supports (10),
dans laquelle la commande
guide les supports (10) sur leur bande sans fin (2) alternativement tout d'abord le long d'un trajet de traitement (3), puis le long d'un trajet de retour (7), entre une première et une deuxième déviation (6, 9),
transporte les supports (10) sur le trajet de traitement (3) soit alignés bout à bout, soit avec des intervalles (15) entre eux, fait accélérer les supports (10) si fort dans la direction de renvoi (8) sur le trajet de retour (7), que ceux-ci s'éloignent plus vite de l'entrée (14) sur le trajet de retour (7) que d'autres supports (10) ne sont guidés à la suite sur le trajet de retour (7) par l'entrée (14) après leur passage à travers le trajet de traitement (3), afin d'augmenter les intervalles (15) entre les supports (10), et limite de nouveau les supports (10) à des intervalles (15) plus petits pour le passage intermittent à travers le trajet de traitement (3).

23. Installation selon la revendication 22, **caractérisée en ce que** les supports (10) présentent une forme plate sensiblement bidimensionnelle.

24. Installation selon la revendication 23, **caractérisée en ce que** les supports (10) sont formés comme des palets.

25. Installation selon la revendication 23 ou 24, **caractérisée en ce que** les supports (10) présentent un côté porteur, les accessoires de positionnement étant portés sur le côté porteur des supports (10).

26. Installation selon l'une des revendications 22 à 25, **caractérisée en ce que** le guidage présente un rail le long de la bande sans fin (2).

27. Installation selon l'une des revendications 22 à 26, **caractérisée en ce que** le guidage présente une chaîne de transport continue.

28. Installation selon l'une des revendications 22 à 27, **caractérisée en ce que** l'installation présente une station de montage de tuyaux, laquelle est conçue pour monter respectivement un petit tuyau sur des électrodes centrales, pour le positionnement ultérieur en vue d'un soudage dans les couches de film plastique afin de former un orifice dans le sac,
dans laquelle les électrodes centrales sont portées par des montures,
dans laquelle l'installation présente un côté avant (12), un côté arrière (13) et deux côtés frontaux intermédiaires, dans laquelle la bande sans fin (2) s'étend le long du côté avant (12) et le long du côté arrière (13) et présente une unité rotative respectivement sur les deux côtés frontaux,
dans laquelle le côté avant (12) présente différentes stations pour la fabrication et le cas échéant pour le remplissage du sac, et
dans laquelle le guidage est conçu pour déplacer les électrodes centrales de façon intermittente de station en station à une vitesse de côté avant (12) et pour guider une course de retour des montures vers la station de montage de tuyaux sur le côté arrière (13).

29. Installation selon l'une des revendications 22 à 28, **caractérisée en ce que** le guidage présente une pluralité d'aimants activables électroniquement, les supports (10) étant conçus de manière à pouvoir être entraînés magnétiquement.

30. Installation selon l'une des revendications 22 à 29, **caractérisée en ce que** les supports (10) présentent un logement à rouleaux ou un palier à glissement le long de la bande sans fin (2).

31. Installation selon l'une des revendications 22 à 30, **caractérisée en ce que** les supports (10) sont respectivement reliés par encliquetage à l'accessoire de positionnement.

32. Installation selon l'une des revendications 22 à 31, **caractérisée en ce qu'**au niveau de la bande sans fin (2), il est prévu des montures présentant un logement de téton (31) pour les accessoires de positionnement, les accessoires de positionnement présentant des tétons (30) insérables dans les logements de téton (31).

33. Installation selon la revendication 32, **caractérisée en ce que** les tétons (30) sont insérés dans les logements de téton (31) contre une tension de ressort.

34. Installation selon la revendication 33 **ou 34**, **caractérisée en ce qu'**il est prévu un éjecteur pour déplacer les tétons (30) axialement et ainsi éjecter les accessoires de positionnement.
